# EUROPEAN PATENT SPECIFICATION

(11) **EP 1 204 242 B1**
(45) Date of publication and mention of the grant of the patent: **02.02.2005**
(21) Application number: 00850201.5
(22) Date of filing: 30.11.2000
(51) Int. Cl.: H04L 12/28, H04M 11/06

(54) **System and method for provision of broadband access in a telecommunication system**
System und Verfahren zur Bereitstellung eines Breitbandzugangs in einem Kommunikationssystem
Système et procédé pour la fourniture de l'accés à bande large dans un systéme de télécommunication

(30) Priority: 03.11.2000 SE 0040378
(43) Date of publication of application: 08.05.2002
(73) Proprietor: Telefonaktiebolaget LM Ericsson (publ), 164 83 Stockholm (SE)
(72) Inventor: Roos, Sture, 760 10 Bergshamra (SE); Haster, Lars-Olof, 141 31 Huddinge (SE)
(74) Representative: Herbjörnsen, Rut

(56) References cited:
- WO-A-97/37458
- US-A- 6 141 356
- WALTER GORALSKI: "ADSL and DSL Tecnologies" 1998 , MCGRAW-HILL , UNITED STATES XP002169985 1 * page 174, line 4 - line 18; figures 8-1 * * page 175, line 6 - line 17 * * page 176; figures 8-2 * * page 177, line 1 - line 13 * * page 178; figures 8-3 * * page 219; figures 10-2 * * page 223; figures 10-3 * * page 224, line 9 - line 16; figures 10-4 * * page 252, line 5 - line 23 * * page 253; figures 12-1 * * page 258; figures 12-2 * * page 262; figures 12-4 * * page 265; figures 12-6 * * page 268; figures 12-7 *

## Description

### Technical field of the invention

The present invention relates to a system and a method in a telecommunication system for providing access to telecommunication services to subscribers at user terminals, each of which being separately connected to at least one access point via xDSL modems and a communication network, the at least one access point comprising xDSL modems with filters.

### Background of the invention

Internet and its related customer services has had an enormous break through during the last decade. Even though the early stages of what has become the Internet of today were almost unknown only ten years ago, at least among ordinary technically oriented people, the Internet of today is virtually known to everyone in the so-called industrialised world. Everyday, the number of people practising and using the Internet is increasing. Many people use it professionally, such as use in offices and laboratories, but also other kinds of use increases rapidly, such as daily use in people's residences.

Customer services developed that are mainly designed for and are well-adapted to new possibilities governed by the Internet have increased at correspondingly fast pace. As a consequence of the increasing possibilities provided by higher data transmission rates and the enhanced image quality and even on-line video over the Internet, to mention just two conceivable applications among many others, a great demand for higher transmission rates has grown among by potential customers, i.e. future subscribers, which has led to a new and currently developing market including significant business opportunities for several involved parties. The customers may for instance be multimedia interested people who want to be able to download real time video or transfer large amounts of data, such as very high resolution images, music files, etc, to and from computers in their homes. A market challenge it to be able to provide high transmission access to the Internet for every customer who is or might become interested.

In order to provide all of these customers with connections supporting very high transmission rates, preferably bi-directional transmission exceeding 2 Mbit per second, which is sometimes called broadband access according to one of a plurality of definitions, a technique allowing for non-problematic mass-installation is required. Prior art, like for instance the international patent application WO 99/51019, discloses an apparatus for communicating with a telephone company location, which apparatus has an integrated splitter combining DSL and ADSL signals. According to the disclosed invention, also a pair gain remote transceiver terminal is connected to the splitter.

The published but withdrawn international patent application WO 97/37458 discloses a communication system and a method including a communication server having a bank of modems for providing subscribers with access to data communication services. Since all subscribers do not desire access to data communication services constantly and have different needs, the invention disclosed is a means for reducing the number of communication facilities required in that subscribers, without noticing, share the available facilities in response to their detected needs for data communication services.

However, prior art does not disclose a satisfactory solution to the problem of installing connections for a great number of subscribers wanting access to the Internet at high transmission rates, so-called broadband, in a short period of time and with minimised effort of technically qualified staff. Being able to use a minimum of staff is an absolute prerequisite not only for enabling commercial success when mass-connecting the subscribing customers but also for meeting the requirements of installation in a short period of time. Perhaps the most serious drawback associated with prior art is that manual connection involving trained technicians must be made by hand and thus will be a serious bottleneck when a great number of subscribers are about to get connected.

### Summary of the invention

One object of the present invention is to is to alleviate the previously mentioned problems associated with prior art technology. This object is achieved by means of the system of claim 1 and the method of claim 6.

One advantage of the apparatus and method according to the invention is a plug-and-play possibility for the customer himself to access xDSL with high transmission rates. By means of the invention, the currently connected subscribing customer has immediate access to the Internet and is instantly able to use its customer services provided over a broadband access technology.

Another object is to solve the problem of monitoring the great number of connected and installed subscriber equipment. This problem is solved in that a management system is provided to process retrieved additional user information whereby the established connection can be adapted according to user specifications.

Yet another advantage of the present invention is that testing can be performed more efficiently in the telecommunication system either automatically or manually in a simplified way.

### Brief description of the drawings

The above and further features, advantages and benefits of the present invention will be apparent upon consideration of the following detailed description, taken in conjunction with the accompanying drawings, in which like reference characters and figures refer to like parts throughout, and in which:
Fig 1 illustrates a schematic view of one embodiment of the apparatus according to the present invention.
Fig 2 illustrates a schematic view of another embodiment of the apparatus according to the present invention.
Fig 3 is a flow chart illustrating the procedure of how a broadband transmission connection is established by means of the present invention.

### Detailed description of embodiments

The following description is of the best mode presently contemplated for practising the invention. The description is not to be taken in a limiting sense, but is made merely for the purpose of describing the general principles of the invention. The scope of the invention should be ascertained with reference to the issued claims.

Copper wires, such as twisted wire pairs between a telephone exchange and different users of telecommunication services have more a lot more information capacity than the capacity currently used for voice services. Telephones and connected copper wires together with telephone exchanges form the usual telephone network, which is referred to as the PSTN (public stationary telephone network). The PSTN has been build-up during several decades and constitutes an already existing and widely distributed communication network. However, as mentioned above, it can be utilised more effectively than almost exclusively for transmission of voice traffic, which is the current situation. Today many users are connected to the Internet via PSTN by a modem connection, but the transmission rates are not very high and therefore constitute a limiting factor. Several base band and pass band transmission systems, collectively referred to as xDSL, have been developed over the past decade that enable up to several megabits per second, which is several orders of magnitude higher transmission than today's PSTN modem connections. This much higher transmission is also carried over telephone twisted pair loops within the PSTN, i.e. over the already in-place copper cables, which network in most cases is owned by telephony providing companies. The PSTN covers the access to the telecommunication system of for most of the potential high transmission subscribers all over the world. The twisted pair cables made from copper are used for the connection of different end users with a central office.

Due to the above mentioned principally commercial reasons, much of the efforts put down in development of new signal processing techniques has been directed to the objective to use these in-place copper cables. This because substituting them by data transmission lines with a higher bandwidth, like for instance optical glass fibres, would have taken longer time and would also be extremely costly. By means of or-ganising signals, e.g. into ATM (asynchronous transfer mode) data, voice and video signals can be allowed to be carried in a common xDSL payload, which will be described in the following.

The term xDSL is a generic term for a number of similar forms of DSL (digital subscriber line) technologies. The "x" in xDSL is arbitrary and depends on the implemented technology. Two of the major types of used technologies are HDSL (high bit rate digital subscriber line) and ADSL (asynchronous digital subscriber line) but VDSL and SDSL are other similar common technologies included in the generic term xDSL. xDSL processed signals are designed to maximise the rate of transmission of digital signals through subcategories of non-loaded twisted pairs, making use of bandwidths that can be greater than 1 MHz.

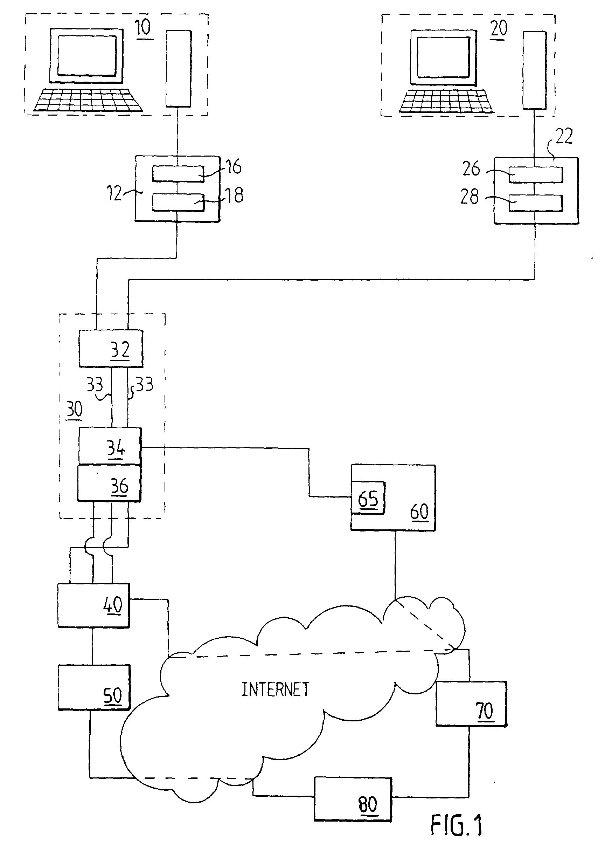

Fig 1 schematically illustrates a first embodiment of the apparatus improving the telecommunication system. In Fig 1 two user terminals 10, 20 are illustrated, each of which is separately connected to a net terminal 12, 22. The net terminal 12, 22 operates as a gateway between the user terminal 10, 20 and the xDSL enhanced telephone network begins at the wall socket and continues outside of the building of the user terminals 10, 20 with copper cables and telephone exchanges. The net terminal 12, 22, including at least one PSTN modem 16, 26 and an xDSL modem 18, 28, provides the user terminal 10, 20 and its subscribing user with access to xDSL services. From the net terminal 10, 20 a copper pair cable 14, 24 leads to a main distribution frame 30, which is divided into two devices, i.e. the line side device 32 and the station side device 34. The two devices of the main distribution frame 30 are preferably integrated and connection between the line side device 32 and the station side device 34 is done by means of so-called jumpers 33. In prior art, these jumpers 33 usually must be manually re-connected in a plurality of combinations depending on in which manner customers of a provider of communication services, a so-called operator, are willing to subscribe to the operator's various customer services.

In order for an xDSL modem to function, a filter must be provided. According to the present invention, a filter arrangement 36 is arranged in the station side device 34 of the main distribution frame 30 containing one filter per expected or potential user terminal 10, 20 to connect to the PSTN via a provided xDSL customer service. Hereby no so-called re-jumpering, i.e. disconnection and then re-connection of a jumper, is required since each potential user in theory is provided with the xDSL service in advance, even though the service must not have been fully realised by final activation of the connection. One example is that the subscriber has not yet received his own net terminal 12, 22. Installation of a filter arrangement 36 is easy and does not require technically trained staff, since user tables or other more or less complicated registers of already connected jumpers and jumpers to be connected or disconnected to a particular connector is no longer necessary. In addition to that advantage, the time of installation can be significantly reduced.

The output of each filter in the filter arrangement 36 is connected to a separate modem in a modem pool 50 via a metallic cross connector 40. The modem pool 50 consists of a number of separate modems corresponding to the number of filters of the filter arrangement 36. An arrangement like the above mentioned solves the problem of keeping order among the connecting wires. More in detail, what is meant is the present need of separating a wire connecting a particular filter of the filter arrangement 36 to a particular modem of the modem pool 50. According to the invention, it is no longer crucial to keep the order when connecting the wires that may even be intersected without effecting the functionality and operation of the wire installation. These improvements in relation with prior art technology simplify the installation for staff of the communication service provider and further reduces the time needed for installation, which is beneficial for the operator as well as for the communication service provider.

The net terminal 12, 22 also includes an in-band modem, like for instance a standard V.90 modem. By means of this standard modem, an initial connection is established with a broadband access control server 70. The initial connection is established with the broadband access control server 70 via the station side 34 of the main distribution frame 30 and a central office 60. The central office 60 has an arrangement of line cards 65 including several state of the art access possibilities and transmission techniques, such as for instance PSTN and ISDN. The connection from the central office 60 to the broadband access control server 70 is via the Internet, whereby an communicative internet protocol is used, such as the well-known protocol TCP/IP. When the broadband access control server 70 has been connected, it transfers information required for initialising xDSL by means of the modem pool 50 to the metallic cross connection 40.

A further possibility is that the broadband access control server 70 also retrieves user information in the form of a plurality of user specific parameters, in order to get the net terminal 10, 20 and the specific modem of the xDSL modem pool 50 to operate in a way expected by the customer. In one embodiment, the broadband access control server 70 is supported by a management system 80 for providing the metallic cross connection 40 and the modem pool 50 with user specific instructions, whereby the functionality can be adapted to requirements of each specific user of the xDSL connected user terminal 10, 20. In case of applying a management system 80, it communicates with either of, or with both of the metallic cross connection 40 and the xDSL modem pool 50 via the Internet. However, in another embodiment according to the invention, the tasks of the management system 80 are performed by the broadband access control server 70.

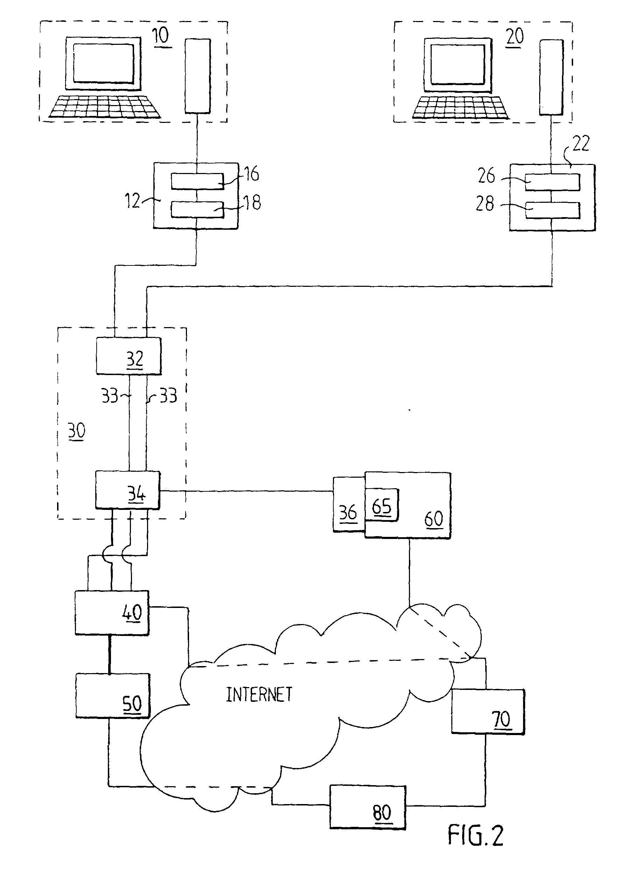

According to a second embodiment and with reference to Fig 2, the filter arrangement 36 is connected directly in front of the connectors of the line cards 65 instead of in the main distribution frame 30. One advantage of an arrangement like that is the space saved in the main distribution frame 30. In many cases there is lack of space in the main distribution frame 30, whereas the central office 60 provides more space. Another advantage is that centralisation of filter arrangements 36 means less distributed locations, which is beneficial for service and maintenance reasons.

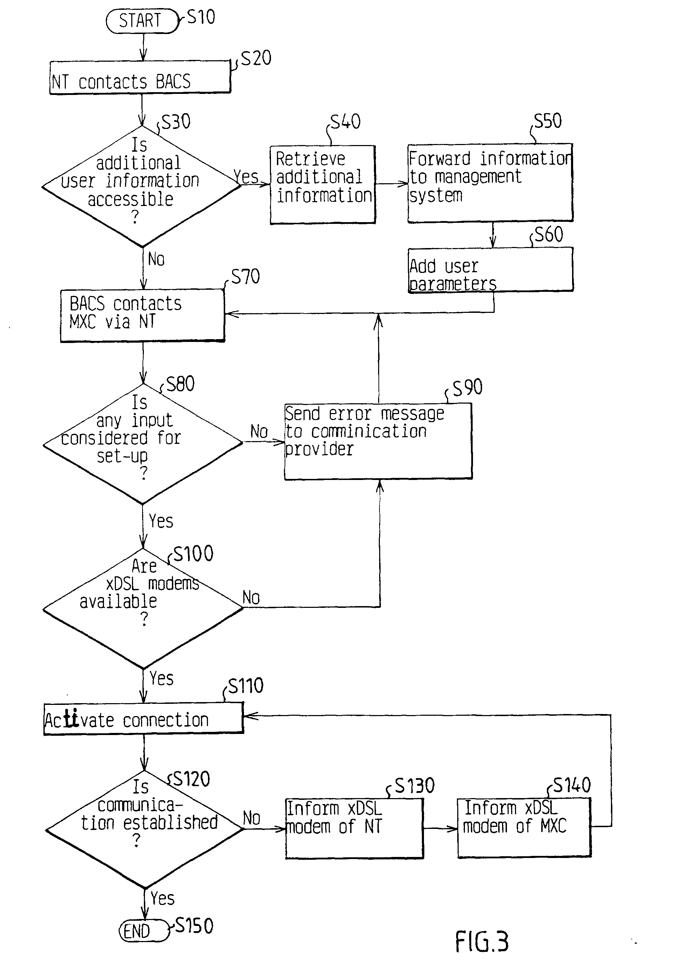

Referring to Fig 3, an operational sequence of the apparatus according to the present invention is described. The order of communication and the steps of actions taken are as follows: To start (S10) with, the net terminal 12, 22 via its standard PSTN modem 16 contacts (S20) the broadband access control server 70, which is responsible for establishing a connection between the xDSL modem 18, 28 of the net terminal 12, 22 and an available xDSL modem of the modem pool 50. A request for additional user parameters is sent (S30), and if such additional information exists it is retrieved (S40) by the broadband access control server 70. The parameters are forwarded (S50) to the management system 80 and subsequently, after having established a connection, the connection can be adapted (S60) by means of consideration to user parameters. If no additional user parameters are available, the sequence continues in that the broadband access control server 70 either instructs the net terminal 12, 22 to send (S70) a unique and identifiable signal, or sends the signal itself, to the metallic cross connection 40 in order to determine (S80) what inputs of the metallic cross connection 40 are unoccupied, and hence may be considered for establishment of a connection. In case no available inputs are found, an error message is sent (S90) to the operator of the communication system. When at least one unoccupied input has been found (S100), the metallic cross connection 40 chooses one of the inputs and establishes a connection. Furthermore, the metallic cross connection 40 determines (S100) whether there are xDSL modems available. If no modems are available, an error message is sent (S90) just like after another previous step in the sequence to the operator of the communication system. Connection is activated (S110) and monitored (S120) by the broadband access control server 70. However, if the activation fails, the broadband access control server is informed about the failure in establishing connection and takes action for informing (S130, S140) any of the net terminal's xDSL modems 18,28 and the modem pool's 50 xDSL modems in case it is needed. After having established such a high speed connection for transmission, the connection remains activated as long as the subscription is maintained by the customer and thus, the operative sequence is ended (S150).

By means of the invention, the currently connected subscribing customer has immediate access to the Internet and is able to use its customer services provided. The customer can regard the installation as being a so-called plug-and-play solution to access xDSL with accordingly high transmission rates. The operator does not have to be actively involved in the installation procedure, which is performed by the customer himself. However, the operator is of course able to monitor the installation and support the customer if help or support is needed.

## Claims

1. A system for providing access to telecommunication services to subscribers at user terminals (10, 20), each of which being separately connected to at least one access point (30, 40, 50, 60) via a net terminal (12, 22) including at least one xDSL modem (18, 28), and a communication network (24), wherein
the at least one access point (30, 40, 50, 60) comprises a pool of a plurality of xDSL modems (50) connected with a pool of a plurality of filters (36),
the system **characterised in that**
the net terminal (12, 22) is provided with an in-band modem (16, 26) for transmitting a signal including user terminal identity to a control means (70); and
the control means (70) is adapted to search for an available connection path for the net terminal (12, 22) at a cross connection (40) of the access point (30, 40, 50, 60) and to create and activate a bi-directional broadband data transmission between the user terminal (10, 22) and at least one xDSL modem (50) of the access point (30, 40, 50, 60) using the in-band modem (16, 26) connection of the net terminal (12, 22) for initial installation of the bi-directional broadband data transmission path.

2. An apparatus in a telecommunication system according to claim 1, **characterised in that**
the control means (70) is adapted to retrieve subscriber information to individualise the established connection.

3. An apparatus in a telecommunication system according to claims 1 or 2, **characterised in that,**
the pool of filters (36) is connected directly to the station side (34) of a first access node (30).

4. An apparatus in a telecommunication system according to claims 1 or 2, **characterised in that,**
the pool of filters (36) is connected in front of at least one line card connector (65) of a second access node (60).

5. An apparatus in a telecommunication system according to anyone of preceding claims, **characterised in that**,
a management system (80) is provided to process retrieved additional user information whereby the established connection can be adapted according to user specifications.

6. A method in a system for providing access to telecommunication services to subscribers at user terminals (10, 20), each of which being separately connected to at least one access point (30, 40, 50, 60), via a net terminal (12, 22) including at least one xDSL modem (18, 28), and a communication network (24), the at least one access point (30, 40, 50, 60) comprising xDSL modems (50) with filters (36),
**characterised by** the steps of
transmitting a signal from an in-band modem (16, 26) of the net terminal (12, 22) including user terminal identity to a control means (70);
searching, by the control means (70), for an available connection path for the net terminal (12, 22) at a cross connection (40) of the access point (30, 40, 50, 60); creating, by the control means (70), a bi-directional broadband data transmission path between the user terminal (10, 20) and at least one xDSL modem (50) of the access point (30, 40, 50, 60) using the in-band modem (16, 26) connection of the net terminal (12, 22) for initial installation of the bi-directional broadband data transmission path; and
activating, by the control means (70), the bi-directional broadband data transmission path between the user terminal (10, 20) and the at least one xDSL modem (50) of the access point (30, 40, 50, 60).

## Patentansprüche

1. System zur Bereitstellung von Zugang zu Telekommunikationsdiensten für Abonnenten an Benutzerterminals (10, 20), von welchen jedes getrennt an mindestens einen Zugangspunkt (30, 40, 50, 60) über ein Netzterminal (12, 22) angeschlossen ist, das mindestens ein xDSL-Modem (18, 28) und ein Kommunikationsnetz (24) umfasst, wobei
der mindestens eine Zugangspunkt (30, 40, 50, 60) einen Bestand einer Vielzahl von xDSL-Modems (50) umfasst, die mit einem Bestand einer Vielzahl von Filtern (36) verbunden sind,
System **dadurch gekennzeichnet,**
**dass** das Netzterminal (12, 22) mit einem Inband-Modem (16, 26) zur Übertragung eines Signals mit der Benutzerterminalidentität zu einem Prüfmittel (70) versehen ist; und
das Prüfmittel (70) geeignet ist, um nach einem verfügbaren Anschlusspfad für das Netzterminal (12, 22) an einer Kreuzschaltung (40) des Zugangspunkts (30, 40, 50, 60) zu suchen und eine Zweirichtungs-Breitbanddatenübertragung zwischen dem Benutzerterminal (10, 22) und mindestens einem xDSL-Modem (50) des Zugangspunkts (30, 40, 50, 60) unter Verwenden des Anschlusses des Inband-Modems (16, 26) des Netzterminals (12, 22) für die anfängliche Installation des Zweirichtungs-Breitbanddatenübertragungspfads zu schaffen und zu aktivieren.

2. Vorrichtung in einem Telekommunikationssystem nach Anspruch 1, **dadurch gekennzeichnet,**
**dass** das Prüfmittel (70) die Abonnenteninformation holen kann, um die erstellte Verbindung individuell anzupassen.

3. Vorrichtung in einem Telekommunikationssystem nach Anspruch 1 oder 2, **dadurch gekennzeichnet,**
**dass** der Bestand an Filtern (36) direkt an die Stationsseite (34) eines ersten Anschlussknotens (30) angeschlossen ist.

4. Vorrichtung in einem Telekommunikationssystem nach Anspruch 1 oder 2, **dadurch gekennzeichnet,**
**dass** der Bestand an Filtern (36) vor mindestens einem Leitungskartenstecker (65) eines zweiten Zugangs knotens (60) angeschlossen ist.

5. Vorrichtung in einem Telekommunikationssystem nach einem der vorhergehenden Ansprüche, **dadurch gekennzeichnet,**
**dass** ein Verwaltungssystem (80) vorgesehen ist, um geholte zusätzliche Benutzerinformation zu verarbeiten, wobei die erstellte Verbindung nach den Benutzerspezifikationen angepasst werden kann.

6. Verfahren in einem System zur Bereitstellung von Zugang zu Telekommunikationsdiensten für Abonnenten an Benutzerterminals (10, 20), von welchen jedes getrennt an mindestens einen Zugangspunkt (30, 40, 50, 60) über ein Netzterminal (12, 22) angeschlossen ist, das mindestens ein xDSL-Modem (18, 28) und ein Kommunikationsnetz (24) umfasst, wobei der mindestens eine Zugangspunkt (30, 40, 50, 60) xDSL-Modems (50) mit Filtern (36) umfasst,
**gekennzeichnet durch** die Schritte,
des Übertragens eines Signals von einem Inband-Modem (16, 26) des Netzterminals (12, 22) mit der Benutzerterminalidentität zu einem Prüfmittel (70);
Suchen **durch** das Prüfmittel (70) nach einem verfügbaren Anschlusspfad für das Netzterminal (12, 22) an einer Kreuzschaltung (40) des Zugangspunkts (30, 40, 50, 60);
Schaffen **durch** das Prüfmittel (70) eines Zweirichtungs-Breitbanddatenübertragungspfads zwischen dem Benutzerterminal (10, 22) und mindestens einem xDSL-Modem (50) des Zugangspunkts (30, 40, 50, 60) unter Verwenden des Anschlusses des Inband-Modems (16, 26) des Netzterminals (12, 22) für die anfängliche Installation des Zweirichtungs-Breitbanddatenübertragungspfads und
Aktivieren **durch** das Prüfmittel (70) des Zweirichtungs-Breitbanddatenübertragungspfads zwischen dem Benutzerterminal (10, 20) und dem mindestens einen xDSL-Modem (50) des Zugangspfads (30, 40, 50, 60).

## Revendications

1. Système de fourniture d'accès à des services de télécommunications à des abonnés sur des terminaux d'utilisateurs (10, 20) dont chacun est connecté séparément à au moins un point d'accès (30, 40, 50, 60) via un terminal de réseau (12, 22) comportant au moins un modem xDSL (18, 28), et à un réseau de communication (24), dans lequel :
ledit au moins un point d'accès (30, 40, 50, 60) comprend une réserve de plusieurs modems xDSL (50) connectés à une réserve de plusieurs filtres (36), le système étant **caractérisé en ce que** :
le terminal de réseau (12, 22) est muni d'un modem intrabande (16, 26) pour émettre à un moyen de commande (70) un signal comportant l'identité du terminal utilisateur ; et
le moyen de commande (70) est conçu pour rechercher un trajet de connexion disponible pour le terminal de réseau (12, 22) dans un sous-répartiteur (40) du point d'accès (30, 40, 50, 60) et pour créer et activer une transmission de données bidirectionnelle à large bande entre le terminal d'utilisateur (10, 22) et au moins un modem xDSL (50) du point d'accès (30, 40, 50, 60) en utilisant la connexion par modem intrabande (16, 26) du terminal de réseau (12, 22) pour la mise en place initiale du trajet de transmission de données bidirectionnel à large bande.

2. Appareil dans un système de télécommunications selon la revendication 1, **caractérisé en ce que**
le moyen de commande (70) est conçu pour extraire des informations d'abonnés afin d'individualiser la connexion établie.

3. Appareil dans un système de télécommunications selon la revendication 1 ou 2, **caractérisé en ce que**
la réserve de filtres (36) est directement connectée au côté station (34) d'un premier noeud d'accès (30).

4. Appareil dans un système de télécommunications selon la revendication 1 ou 2, **caractérisé en ce que** :
la réserve de filtres (36) est connectée en face d'au moins un connecteur de carte réseau (65) d'un second noeud d'accès (60).

5. Appareil dans un système de télécommunications selon l'une quelconque des revendications précédentes, **caractérisé en ce que** :
un système de gestion (80) est prévu pour traiter des informations d'utilisateurs supplémentaires de telle sorte que la connexion établie puisse être adaptée en fonction de spécifications des utilisateurs.

6. Procédé dans un système de fourniture d'accès à des services de télécommunications à des abonnés sur des terminaux d'utilisateurs (10, 22) dont chacun est connecté séparément à au moins un point d'accès (30, 40, 50, 60) via un terminal de réseau (12, 22) comportant au moins un modem xDSL (18, 28), et à un réseau de communication (24), ledit au moins un point d'accès (30, 40, 50, 60) comprenant des modems xDSL (50) munis de filtres (36),
**caractérisé par** les étapes consistant à :
transmettre à un moyen de commande (70) un signal d'un modem intrabande (16, 26) du terminal de réseau (12, 22) comportant l'identité du terminal d'utilisateur ;
rechercher, à l'aide du moyen de commande (70), un trajet de connexion disponible pour le terminal de réseau (12, 22) dans un sous-répartiteur (40) du point d'accès (30, 40, 50, 60) ;
créer, à l'aide du moyen de commande (70), un trajet de transmission de données bidirectionnel à large bande entre le terminal d'utilisateur (10, 20) et au moins un modem xDSL (50) du point d'accès (30, 40, 50, 60) en utilisant la connexion par modem intrabande (16, 26) du terminal de réseau (12, 22) pour la mise en place initiale du trajet de transmission de données bidirectionnel à large bande ; et
activer, à l'aide du moyen de commande (70), le trajet de transmission de données bidirectionnel à large bande entre le terminal d'utilisateur (10, 20) et ledit au moins un modem xDSL (50) du point d'accès (30, 40, 50, 60).
